# EUROPEAN PATENT APPLICATION

(11) **EP 2 640 032 A1**
(43) Date of publication of application: **18.09.2013**
(21) Application number: 13150770.9
(22) Date of filing: 10.01.2013
(51) Int. Cl.: H04L 29/06

(54) **Method and system for user authentication over a communication network**

(30) Priority: 16.03.2012 US 201213422452
(71) Applicant: Mitel Networks Corporation, Ottawa, ON K2K 2W7 (CA)
(72) Inventor: Hillier, Peter Matthew, Kanata, Ontario K2T 0E3 (CA)
(74) Representative: McDougall, James

(57) **Abstract**

A system and method for user authentication over a communication network are disclosed. The system includes a first device having a contact application and a second device having a contact application. A second device is authenticated by transmitting a first security key associated with the first device from the second device to the first device. The system and method provide a means for users of a communication network to uniquely identify one another, which allows users to be uniquely identified and authenticated independent of a device, network, and/or application used for communication.

## Description

### FIELD OF THE INVENTION

The present disclosure generally relates to communication systems and methods. More particularly, the disclosure relates to systems and methods for peer-to-peer user authenticating.

### BACKGROUND OF THE INVENTION

When using a network for communication, it is often desirable to know the identity or contact information of a user, system, application, or other object and/or to be able to verify or authenticate the source that desires to communicate with another user, system, application, or object prior to the communication. Unfortunately, with typical communication systems, such as, for example, email, short message service (SMS), or voice, unless the other object is known to a system, it may be difficult to uniquely identify or authenticate the object prior to initiating communication.

Many communication systems use a unique identifier to facilitate routing of communications and assist with end user identification. For example, in the case of a public switched telephone network (PSTN), private branch exchange (PBX) or similar network, a caller is identified from the account associated with the phone from which he or she is calling. Unfortunately, users may exchange unique identifier information (e.g. your phone number) with others, which may result in unwanted communication attempts from unidentified or misidentified callers.

Social media communication systems often require parties to acknowledge each other, prior to further communication between users. Once the parties acknowledge each other (e.g. using a friend request), the users can easily recognize each other. Similar to the PBX or PSTN case, the social media user identifier is bound to an authenticated account such that communicating parties are reasonably sure of the identity of the person. While social media systems generally provide additional communication authentication, compared to PBX and PSTN systems, additional steps are required for the security, since users must login to a server (typically, a third-party server) to identify themselves to the server, before communication can commence between users. Various forms of user identification and authentication may be dependent on the communication system used to originate and/or transmit the communication. And, with some communication systems, end user identification is optional (e.g., carrier caller ID is often a subscription service that must be paid for to receive). If different systems (e.g., mobile, VoIP, Wi-Fi, etc.) are used in the communication or end-user identification is not otherwise available, the identification information corresponding to the user that initiates communication may not be available and/or may not uniquely identify the user.

Accordingly, improved methods and systems for identifying and authenticating users, which are independent of the source of origination and the communication system employed in the routing, are desired.

### BRIEF DESCRIPTION OF THE DRAWING FIGURES

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates a communication system in accordance with various exemplary embodiments of the disclosure; and
FIG. 2 illustrates a method of authenticating a user over a communication network in accordance with additional embodiments of the invention.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION OF EXEMPLARY EMBODIMENTS

The description of exemplary embodiments of the present invention provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

The disclosure provides a system and method for authenticating users-e.g., of a communication network-and for easily providing encrypted communication between two or more users. The system and method described herein can be used to uniquely identify users without using traditional means of a unique end-user identification and regardless of the source of the origin (e.g., a phone number) and regardless of the transport mechanism or system protocol (e.g., mobile carrier, Wi-Fi, private GSM, or the like). This allows for user-to-user identification and authentication directly between users. As set forth in more detail below, the communication system and method of the present disclosure may be used for a variety of applications, such as voice, SMS, email, chat, and other electronic communication. The system and method can be used to prevent unwanted (or unsecure or unauthenticated) communications and allow a user to control incoming communication, to setup alternate contact methods for certain users, and to provide secure communication (e.g., video, voice, and/or data) over networks. Further, the system and method can be offered over and above any authentication provided by a carrier or service provider.

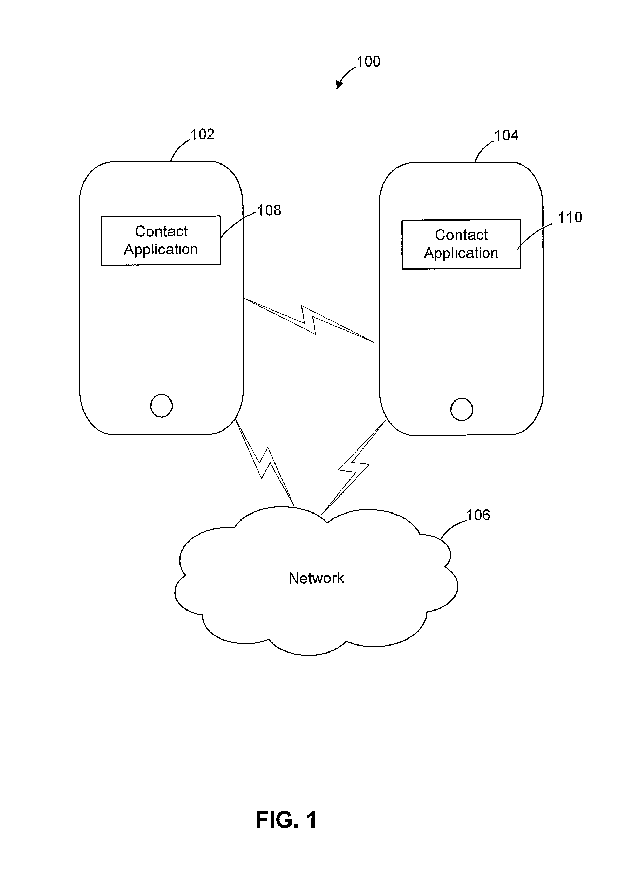

FIG. 1 illustrates an exemplary system 100 in accordance with various embodiments of the disclosure. System 100 may be used for a variety of purposes, such as peer-to-peer authentication, *ad hoc* network creation (such as proximity based, application based, location-e.g., city-based) with authenticated users, and for identification of a user to a server. For example, system 100 may be used to authenticate a user, to reject unauthorized users, and to distinctly handle communication of authorized and unauthorized users. The system may use internet protocol (IP) to identify users, independent of their source of origination and transport mechanism. Use of the system described herein does not require any information from carriers or service providers, but rather provides a means of authentication based on peer-to-peer communication. This allows easy provision of and/or revocation of authentication to particular users and mitigates hijacking of caller contact information.

System 100 includes a first device 102, a second device 104, and optionally a communication network 106. In operation, communication between a first user (e.g., using device 102) and a second user (e.g., using device 104) can be authenticated prior to commencement of the communication by passing a pre-defined security key or keys between the first user and the second user and authenticating the user(s) based on the security key(s). As set forth in more detail below, system 100 may be configured as a two-way or bilateral system, in which a first device (e.g., device 102) must recognize both a first user security key and a second user security key before authenticating communication. Alternatively, system 100 may be configured as a one-way or unilateral system, in which the first device need only recognize and authenticate a security key associated with the first device before authorizing the communication.

Devices 102, 104 may be mobile devices or devices that are wired to network 106. For example, either one or both of devices 102, 104 may include smart phones, tablet computers, personal digital assistants, phones, personal computers, or any other device suitable for communication using system 100. By way of examples, devices 102,104 may be a smartphone running Android, iOS, Windows, Symbian, Blackberry OS, Linux operating systems, or similar operating systems, which is capable of running the client program described in more detail below. Although illustrated with only two devices, system 100 may include any suitable number of devices, which may be coupled to one or more networks 106.

In accordance with exemplary embodiments of the invention, each device 102, 10₄ includes a contact application (a client program) 108, 110 to create, store, transmit and/or receive contact information and a security key, to and/or from another user and to authenticate another user prior to commencing communication with the other user. The application may provide per-contact storage for a security key associated with each contact, such that the security key can be used to authenticate communication across multiple platforms. Using the contact application and security key(s) described herein enables users to verify or authenticate (or not) communications from other users for pre-defined acceptance (or rejection) of communication.

Application 108, 110 may employ two-way or bilateral authentication, in which case a first user and a second user exchange security keys, and both keys must be verified by a first user to authenticate the second user, and *vice versa.* Alternatively, application 108, 110 may employ one-way or unilateral authentication, in which case, a first device provides a second device with the first device's security key and the first device authenticates communication only upon receiving and authenticating the first device security key from another/second device.

Contact application 108, 110 may also store additional identifiers associated with users that may be used by various applications (e.g., phone, chat, email, and the like). In accordance with other embodiments, other users' security keys are not stored in the contact application, but rather, the security keys are stored remotely. In this case, a user launches the contact application, which consults a remote key database to determine whether the caller has the requisite security key(s), and if not, treats the communication as an unsecure communication.

In accordance with exemplary embodiments, contact application 108, 110 is configured, such that a security key provided by a user cannot be viewed, copied, or manipulated by other users. The contact application may be further configured, such that the application does not allow imports of contacts from data files to which the application did not export. In this case, a user cannot backup or copy contacts from one device and copy them to another device. This prevents unauthorized sharing of security keys and thus reduces false authentication of communications.

The security key may include a defined public key infrastructure (PKI) model based on certificates, a pre shared key (PSK) shared between a contact in contact application 108 and a person, or any other suitable certificate that can be passed between and verified by users. In accordance with various embodiments, the security key is provided by and managed by the user to which the security key is associated. In accordance with further aspects, the security key may be time limited, so that calls from a user are able to be authenticated only for the specified amount of time.

The security key can be associated with individual contacts, a group of contacts, or multiple groups of contacts. When the security key identifies a group or groups, the security key facilitates classifications techniques to sort communications and take actions (e.g., authentication) based on classifications.

A security key can also be used to flag a group of users, such as coworkers. In this case, a user's personal contact information, including the associated security key, can be placed in a secure directory. When a second user accesses the directory and attempts to communicate with the first user, the directory application can provide the first user's key, such that the first user can identify the directory or group and therefore know how the second user obtained the first user's number or other contact information. Communication network 106 may include a local area network (LAN), a wide area network, a personal area network, a campus area network, a metropolitan area network, a global area network, or the like. Network 106 may be coupled to devices 102, 104 using an Ethernet connection, other wired connections, a Wi-Fi interface, other wireless interfaces, or the like. Network 106 may be coupled to other networks and/or to other devices typically coupled to networks.

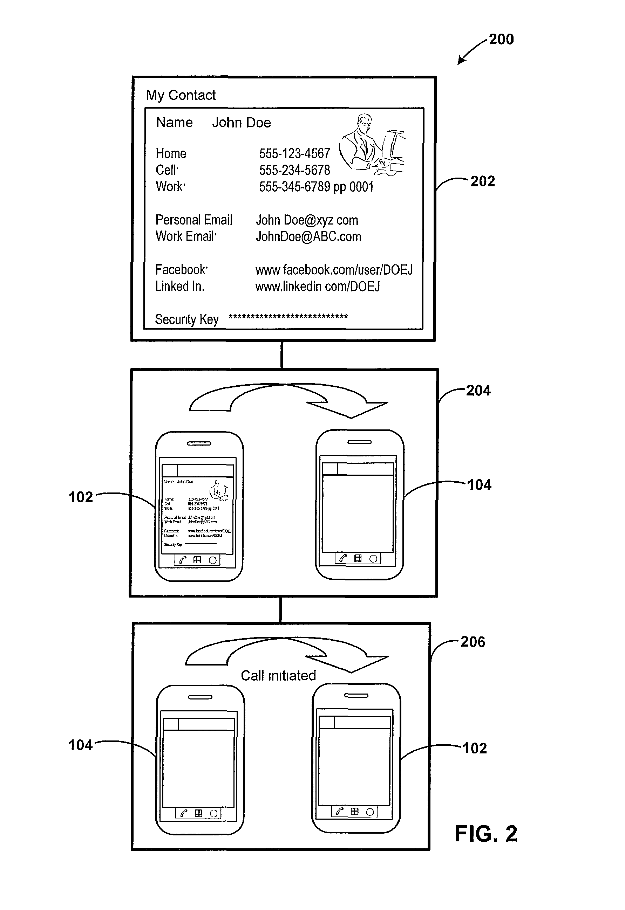

FIG. 2 illustrates a method of authenticating a user 200 in accordance with various exemplary embodiments of the invention. Method 200 includes the steps of providing contact information (step 202), transferring the contact information to another user (step 204), and authenticating and initiating a communication (step 206).

During step 202, contact application 108 is enabled and a user's contact information and security key, and optionally other contacts' information, are input, e.g., using device 102. The user's contact information and security key may be input manually, or may be retrieved from storage on the device. The contact information may include a variety of information, including the contact's name, phone numbers (e.g., home, cell, work, etc.), social media contact information, birthdates, photographs, and the like, which can be shared with other users. The security key may be selected by the user, retrieved from a server (e.g., on network 106), or generated using contact application 108.

In accordance with various aspects of these embodiments, user classes or categories, such as "friends," "family," "coworkers," "default," and the like may be established and an amount and/or type of contact information shared with another user can be based on the designated class of the user. Members of the classes or categories may be provisioned the same security key from the first user and may share a second security key associated with the class (for two-way authentication). Alternatively, the class may be designated a security key by the first user and authenticated using only the first key (one-way system) or using the first key and a unique key associated with each second user (alternative two-way system).

A user can change his or her security key at any time to prevent unwanted communication and reduce communication that might otherwise be authenticated by misappropriation of one or more (e.g., first and/or second user) security keys. Periodically updating a user's security key may increase application security, because it requires all other devices to use the updated security key to be authenticated. If desired, the new security key can be pushed to all or some of the previously authenticated users stored in contact application 108. Because contact application 108, 110 includes a list of a user's trusted contacts, new contact information, including a new security key can be easily pushed to members of the list.

During step 204, in accordance with exemplary embodiments of the disclosure, contact information and security key from device 102 of a first user is pushed to contact application 110 of second device 104 of a second user using electronic communication, such as, for example, email, SMS, proximity, or other exchange method. The amount and type of information transferred from the first device to the second device may depend on the class designation of the first and second user.

Step 204 may be initiated by a request from the second user for the contact information of the first user. In this case, when a request is received by the first user and the second user is authenticated, the designated (e.g., by class) contact information and the security key of the first user may be pushed to the second user.

In the case of two-way or bidirectional authentication, when first user provides second user with contact information and a security key (e.g., during step 204), the second user may send the first user the second user's contact information and security key. The second user may be prompted to push the second user's contact information to the first user, or the second user may have a protocol established to automatically push contact information to pre-approved users. In addition, contact updates, such as a change of a security key, may be automatically pushed to and updated by users that have established a two-way trust system.

As noted above, in the case of a two-way system, when one user updates his or her security key, the updated security key may be automatically pushed to the second user. In this case, unique security keys may be generated on each exchange of contact information, which allows the keys to be used as a unique identifier of the user, which in turn allows the user to share the contact information among multiple devices (e.g., office phone, home phone, tablet, cell phone, and the like), while still being uniquely identified as secure to another user.

Alternatively, a user's contact information and the security key may be passed as part of a communication (e.g., call) setup. For example, the contact information may be passed using a session initiation protocol using VoIP. The information is then passed to the contact application for authentication.

Once the second user has the first user's contact information and the security key, the source of calls from the first user to the second user can be easily identified by the second user using the security key of the first user.

During step 206, a user (e.g., second user) attempts to initiate communication with another user (e.g., first user). In the case of one-way authentication, if the first user authenticates the security key associated with the first user and transmitted from the second user to the first user, then communication between the first user and the second user commences. In the case of two-way communication, communication between devices 102,104 commences only if both the security key associated with first device 102 and the security key associated with second device 104 are transmitted from the second device to the first device and are recognized and authenticated by first device 102. Once the security key(s) are authenticated, a communication application, such as a phone or email application is activated to commence communication.

The communication may be authenticated using application 108, 110 outside or independent from the communication application (e.g., phone, email) to reduce the risks associated with incompatibility of the respective users' communication applications. Alternatively, contact application 108, 110 could push the contact security key into the communication application storage area to facilitate compatibility between the respective users' communication applications.

Communication applications (e.g., phone dialers or email applications) may be configured to automatically employ the contact application described herein to authenticate communication. In this case, a second user activates the application to communicate with the first user and accesses the first user's contact information and security key stored in the second device's contact application. Second user's contact application 110 then notifies first user's contact application 108 of the pending communication exchange and provides the first user's security key (one-way system) or the first and second users security keys (two-way system). Authentication of the security key(s) enables the first user's contact application to grant access to the communication application on the first user's device. When the communication is in the form of a phone call, for example, and the first user's contact application authenticates security key(s) from a second application, first user's contact application 108 communicates with a phone application to accept an incoming call. As the call is accepted, additional second user information, such as name, phone number, photograph, and other information stored in the second user's contact information, corresponding to the second user, may be transferred and displayed on the first user's device. In the case of email, when the first user's contact application recognizes the security key(s) from a second application, first user's contact application 108 communicates with an email application to accept the incoming email message from the second user.

If a communication, such as an email or phone call, is not authenticated, unsecure communication protocols may be employed. For example, a phone call may be diverted to voicemail and the contact information of the caller, if any, may be displayed and/or placed in a call log, which may be designated as unsecure. The "unsecure" call log provides easy access to allow a user to review unauthenticated or unsecure calls and determine whether or not to grant access to such callers. Such access may be granted based on, for example, the caller ID of the caller. Access may be granted on an *ad hoc* basis, or the caller may be designated as secure, such that future calls from that caller will not be treated as unsecure, even though the caller does not have the first user's security key. In this case, authentication may be based on a specific phone number or other identification associated with a user, such that other numbers associated with that user would also have to be authenticated to be treated as secure. Alternatively, if the unsecured caller employs contact application 110, upon receipt of the unsecure call, the first user can send the first user's contact information and the security key to authenticate the call. Similarly, in the case of email, if an incoming email is not recognized as secure, the email may be directly sent to a spam or unsecure email folder for review, and/or the first user may designate the second user as secure, either *ad hoc* or until classified otherwise, and either manually or automatically.

In accordance with some embodiments, the identity of any unsecured user may be blocked. However, this may make communicating with unsecured users more difficult.

In accordance with various embodiments of the invention, the unsecure communication protocol may receive secure contact information from a second user, including the second user's security key, such that the first user now has the second user's contact information and security key, and calls from the first user to the second user are now recognized as secure. Alternatively, if the second user initiates communication with the first user and the first user returns the communication, the first user's communication in response to the second user's communication may be automatically recognized as secure-even without a first user security key. This can be used to prevent a deadlock situation, where both users enable contact applications, which require a security key to authenticate a communication, but neither user has the other user's contact security key.

In accordance with yet additional embodiments of the invention, existing contact synchronization tools, such as Gmail sync, can be used to sync contact information received by or entered into a contact application as described herein. This allows existing programs, such as Gmail to be configured to send all unrecognized communication to a designated folder, such as spam. Similarly, recognized and authenticated email could be sent to designated folders (e.g., designated by user) or sent to the user's inbox.

In accordance with additional exemplary embodiments, a user may use contact application 108 to securely communicate with a server on network 106. For example, contact information, including user preferences for a device may be broadcast to a server if the server recognizes the user's security key. This function may be used, for example, to configure a car to a user's specification (e.g., imperial versus metric, preferred radio stations, the user's satellite radio account, seat and mirror positions, and the like).

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. A communication system for authenticating a user, the system comprising:
a first device comprising a first contact application and a first security key;
a second device comprising a second contact application; and
a communication network,
wherein the second contact application is configured to receive the first security key, and
wherein the first contact application authenticates a call from the second device based on receiving and authenticating the first security key from the second device.

2. The communication system for authenticating a user of claim 1, wherein the security key corresponds to an individual or alternatively wherein the security key corresponds to a group.

3. The communication system for authenticating a user of claim 1 or claim 2, wherein the second device further comprises a second key.

4. The communication system for authenticating a user of any of claims 1 to 3, wherein the first device is selected from the group consisting of smart phones, tablet computers, personal digital assistants, phones, and personal computers.

5. The communication system for authenticating a user of any preceding claim, further comprising a log for unsecured communication attempts.

6. The communication system for authenticating a user of any preceding claim, further comprising a directory, wherein the first security key is stored in the directory.

7. The communication system for authenticating a user of any of claims 1 to 5, further comprising server, wherein the first security key is stored on the server.

8. A method of authenticating a user, the method comprising the steps of:
providing a first device having a contact application;
entering contact information for a first user of the first device;
entering a security key corresponding to the contact information for the first user;
transferring the contact information and the security key to a second device; and
authenticating a communication between the first device and the second device based on the security key.

9. The method of authenticating a user of claim 8, wherein the contact information comprises one or more of a name, a phone number, social media contact information, a birth date, and a photograph.

10. The method of authenticating a user of claim 8 or claim 9, wherein the security key is selected by the first user or alternatively wherein the security key is generated using the contact application.

11. The method of authenticating a user of any of claims 8 to 10, further comprising the step of classifying a group of users.

12. The method of authenticating a user of any of claims 8 to 11, further comprising the step of pushing a new security key to previously authorized users.

13. The method of authenticating a user of any of claims 8 to 12, further comprising the step of initiating a request by the second device for the first device to transfer the contact information and the security key and/or wherein the contact information and the security key are transferred as part of a call setup.

14. The method of authenticating a user of any of claims 8 to 13, further comprising the step of identifying a call from the first user using a security key associated with the second user and/or further comprising the step of transferring contact information associated with a user of the second device and a security key associated with the second user to the first device.

15. A system for authenticating a call, the system comprising:
a first device having a first contact application and a first security key; and
a second device having a second contact application and a second security key;
wherein the first security key is pushed to the second device and the second contact application is configured to receive the first security key, and
wherein the first contact application authenticates a call from the second device based on receiving the first security key from the second device and optionally further comprising a network coupled to the first device and the second device.
